# EUROPÄISCHE PATENTSCHRIFT

(11) **EP 0 952 619 B1**
(45) Veröffentlichungstag und Bekanntmachung des Hinweises auf die Patenterteilung: **19.05.2004**
(21) Anmeldenummer: 98107146.7
(22) Anmeldetag: 20.04.1998
(51) Int. Cl.: H01M 2/00, H01M 10/52

(54) **Rekombinationsvorrichtung zur katalytischen Rekombination von in Akkumulatoren entstehendem Wasserstoff und Sauerstoff zu Wasser**
Recombining means for catalytic recombination of in accumulators developped hydrogen and oxygen into water
Dispositif de recombinaison pour la recombinaison catalytique en eau d'hydrogéne et d'oxygène développés dens des accumulateurs

(43) Veröffentlichungstag der Anmeldung: 27.10.1999
(73) Patentinhaber: Accumulatorenwerke Hoppecke Carl Zoellner & Sohn GmbH & Co. KG, 59929 Brilon (DE)
(72) Erfinder: Kesper, Heinrich, 34508 Willingen (DE); Lahme, Norbert, 59929 Brilon (DE); Vielhaber, Ute, 59909 Bestwig (DE)
(74) Vertreter: Stenger, Watzke & Ring Patentanwälte

(56) Entgegenhaltungen:
- EP-A- 0 189 543
- DE-A- 3 018 372
- US-A- 3 944 437
- US-A- 4 002 496
- US-A- 4 048 387
- PATENT ABSTRACTS OF JAPAN vol. 006, no. 021 (E-093), 6. Februar 1982 & JP 56 141181 A (NIPPON TELEGR & TELEPH CORP), 4. November 1981
- PATENT ABSTRACTS OF JAPAN vol. 009, no. 321 (E-367), 17. Dezember 1985 & JP 60 154457 A (NIPPON DENSHIN DENWA KOSHA), 14. August 1985

## Beschreibung

Die vorliegende Erfindung betrifft eine Rekombinationsvorrichtung zur katalytischen Rekombination von in Akkumulatoren entstehendem Wasserstoff und Sauerstoff zu Wasser.

Rekombinationsvorrichtungen für elektrische Akkumulatoren sind seit über 25 Jahren Stand der Technik. Eine entsprechende Vorrichtung ist beschrieben in der DE-PS 20088218. Ein Katalysator ist offenbart in der DE-PS 2213219, Absorber in den DE 2237950 C3 und DE 2265701 C3. Aus der JP 56 14181 A ist eine einstückige Rekombinationsvorrichtung, die an ihrem unterem Ende über einen Anschlussstutzen zu ihrem Anschluss an einen Akkumulator und einen Verbindungskanal zu einem Außenbehälter verfügt, bekannt.

Der grundsätzliche Aufbau ist bis heute im Grunde unverändert. Kernstück der Rekombinatoren ist ein mit einem Katalysator beschichteter Stab, z.B. aus Kupfer, Tonerde oder dergleichen. Als Katalysatoren sind vor allem Platinmetalle bekannt, insbesondere Palladium. Der Katalysatorstab ist in eine Röhre aus porösem Material, beispielsweise einem gasdurchlässigen Keramikrohr, zentrisch eingesetzt und der in der Röhre verbleibende Freiraum ist mit Absorbermaterial gefüllt. Hierzu sind Bleioxide, Silbernitrat, Eisenoxide, Kupferoxide und dergleichen bekannt. Die Röhre ist freistehend in einen gasdichten Behälter, vorzugsweise Kunststoffbehälter eingebracht und an den Stirnseiten verschlossen. Der Behälter weist einen Rohrstutzen zum Anschluß an einen Akkumulator für die Gaszufuhr und den Wasserablauf auf.

Fortsetzung des Textes mit dem ersten Absatz auf Seite 2 der ursprünglichen Anmeldung.

Die beim Betrieb eines Akkumulators entstehenden Gase Wasserstoff und Sauerstoff, also ein Knallgasgemisch, werden über den Rohrstutzen in den Behälter geführt, passieren die poröse Röhre und die Absorber und werden am Katalysator zu Wasser rekombiniert. Die Reaktion ist exotherm und das Wasser schlägt sich als Wasserdampf an der Behälterwandung nieder, kondensiert und fließt über den Rohrstutzen in den Akkumulator zurück.

In den genannten Druckschriften ist der Behälter mit direkt angeformtem Rohrstutzen einstückig, beispielsweise als Kunststoffspritzteil, ausgebildet und weist eine Öffnung auf, in welche die beschriebene Katalysatoreinheit gasdicht eingesetzt ist. Ein entweichen von Knallgas ist ausgeschlossen.

Im Stand der Technik sind auch Bauformen bekannt, bei welchen der Rohrstutzen und der Behälter separat hergestellt und nach dem Einsetzen der Katalysatoreinheit mittels eines Halteelementes zusammengesetzt und, beispielsweise durch schweißen, miteinander verbunden werden.

Die vorbekannten Rekombinationsvorrichtungen weisen eine Reihe von Nachteilen auf. Die Herstellung der einzelnen Elemente ist zwar einfach, soweit es sich um Kunststoffteile handelt, jedoch ist ihre Montage aufwendig und einer Automatisierung nicht zugänglich. Wegen der exothermen Reaktion muß das gesamte aufwendige Halteelement aus hochwertigem hitzebeständigen Kunststoff hergestellt werden. Eine zeitgemäße Materialtrennung für die Entsorgung oder gar eine Wiederverwertung von einzelnen Teilen ist nur mit großem Aufwand möglich. Einsatzbedingt ist die Behältergröße beschränkt und die Dimensionierung der Katalysatoreinheit auf eine unter normalen Einsatzbedingungen zu erwartende Gasmenge abgestimmt. Treten jedoch größere Gasmengen auf, bei Überlastung, größerem Ladestrom oder dergleichen, füllt sich der Behälter mit Wasserdampf und es entsteht ein Behälterinnendruck, der den Zustrom weiteren Gases verhindert. Die einwandfreie Funktion der Einheit ist nicht mehr gewährleistet. Ein unkontrolliertes entweichen von Knallgas muß jedoch ausgeschlossen sein. Auch hat sich herausgestellt, daß der Wirkungsgrad der Katalysatoreinheit bei Überlastung erheblich reduziert wird, da das in den Behälter strömende Knallgas die Katalysatoroberfläche nicht mehr gesichert und kontrollierbar erreicht.

Ein einfaches Ableiten von Knallgas in die Umgebung würde eine Zündgefahr bedeuten, mit der Folge, das sich die Flamme bis in den Akkumulator fortsetzen könnte.

Neben den wirtschaftlichen Nachteilen in Bezug auf Produktion, Montage und Entsorgung bzw. Wiederverwendung stehen die Sicherheitsnachteile bei Überlastung im Vordergrund. Die Rekombinationsvorrichtungen sind vorzugsweise bei Stand-By Akkumulatoren, Notstromeinheiten und dergleichen im Einsatz und müssen eine sichere Funktion bei weitestgehender Wartungsfreiheit auch über lange Zeiträume gewährleisten.

Ausgehend von dem beschriebenen Stand der Technik liegt der vorliegenden Erfindung die Aufgabe zugrunde, eine Rekombinationseinheit der beschriebenen Art dahingehend zu verbessern, daß auch bei Überlastung eine Gefährdung durch entweichendes Gas vermieden ist. Weiterhin soll bei Überlastung der Wirkungsgrad der Katalysatoreinheit nicht gemindert werden. Insgesamt soll die Vorrichtung mit geringem wirtschaftlichem Aufwand herstellbar, einfach montierbar und wartungsfrei gestaltet werden.

Zur technischen Lösung der Aufgabe wird mit der Erfindung vorgeschlagen eine Rekombinationsvorrichtung mit einem Anschlußstutzen zum gasdichten Anschluß der Vorrichtung an einen Akkumulator, einem gegenüber der Umgebung gasdichten Behälter, in welchem ein Rekombinationselement angeordnet ist, und einem Verbindungskanal für den gasdichten Gaszutritt vom Anschlußstutzen zum Behälter und den Wasserablauf in umgekehrter Richtung, wobei neben dem Verbindungskanal ein Volumenbereich ausgebildet ist, der gegenüber der Umgebung offen aber durch ein Zündschutzelement abgegrenzt ist, und wobei der Verbindungskanal mit dem Volumenbereich über eine Verbindungsöffnung verbunden ist.

Aufgrund der erfindungsgemäßen Ausgestaltung strömt Gas aus dem Akkumulator über den Verbindungskanal in den Behälter, wobei im Bedarfsfalle Gas über die Verbindungsöffnung in den neben dem Verbindungskanal angeordneten Volumenbereich ausweichen und gegebenenfalls durch das Zündschutzelement in die Umgebung entweichen kann. Vorzugsweise ist der Volumenbereich ein seitlich an den Verbindungskanal angeordneter, von diesem abstehender Rohrstutzen. Der Verbindungskanal selbst kann ein Rohrelement sein, vorzugsweise trichterförmig, was den Wasserablauf begünstigt, an dessen Wandung ein dazu im wesentlicher senkrecht stehender Rohrstutzen angeformt ist. Es wird vorgeschlagen, daß das Zündschutzelement eine aus einem Sintermaterial bestehende Fritte ist. Geeignet sind beispielsweise gesintertes Polypropylen oder Polyethylen. Die Verbindungsöffnung ist eine Bohrung in der Wandung des Verbindungskanals, deren Durchmesser gegenüber dem des Verbindungskanals sowie gegenüber dem des Volumenbereiches erheblich verringert ist. Die Verbindungsöffnung ist also sehr klein, beispielsweise weist sie einen Durchmesser von etwa 1 mm auf, während der Verbindungskanal oder der Volumenbereich Durchmesser von etwa 2-4 cm aufweisen. Damit ist unter normalen Betriebsbedingungen ein Abströmen von Gas in die Umgebung ausgeschlossen. Strömt jedoch Gas bei Überlastbedingungen ab, verhindert die Fritte ein Durchschlagen einer Explosion. Durch die erfindungsgemäße Zündhemmung wird die Rekombinationsvorrichtung unter Sicherheitsgesichtspunkten auf einfache Weise erheblich verbessert.

Eine weitere Verbesserung der Sicherheit in Bezug auf eine mögliche Zündung ergibt sich aus einem weiteren Aspekt der Erfindung. Üblicherweise ist ein Entgasungssystem hinsichtlich der Dimensionierung auf eine bei Akkumulatoren kapazitäts- oder ladestromabhängige zu erwartende Gasmenge abgestimmt, so daß im Zündungsfall eine kurzzeitige Abflammung der Gase, die die Fritte passiert haben, auftritt. Entstehen jedoch darüber hinausgehend grössere Gasmengen, wird die Flamme ständig genährt. Diese Flamme zerstört in kurzer Zeit auch die Fritte, so das kein Zündschutz mehr gegeben ist, mit den bekannten Folgen. Man spricht dann von Zündrückschlag. Ist beispielsweise ein Akkumulator für einen Ladestrom von 20A vorgesehen, ist das Entgasungssystem für die dabei zu erwartende Gasmenge ausgelegt. Von der elektrotechnischen Kapazität her können heutige Akkumulatoren leicht für Aufgaben eingesetzt oder modifiziert werden, bei denen höhere Ladeströme vorgesehen sind oder gefordert werden. Treten höhere Ladeströme auf, oder soll ein Akkumulator bei annähernd gleicher Dimensionierung für höhere Ladeströme ausgelegt werden, erhöht sich die erzeugte Gasmenge erheblich und es kann der Zündschutz aus den angeführten Gründen nicht mehr gewährleistet werden. Die Rekombinationseinheit soll auch bei Auftreten erheblich größerer als auslegungsgemäß erwarteter Gasmengen gegen Zündrückschlag gesichert sein. Dabei sollen vorgegebene Bauformen und Baugrössen nicht grundsätzlich verändert werden. Gemäß einem weiteren Aspekt der Erfindung wird daher vorgeschlagen, daß in Gasströmungsrichtung hinter dem Zündschutzelement ein Gasaustrittskanal mit wenigstens einer Gasaustrittsöffnung mit einem gegenüber dem Gasaustrittskanal erheblich verringertem Durchströmungsquerschnitt ausgebildet ist. Es hat sich überraschend herausgestellt, daß die erfindungsgemäße Ausbildung dazu führt, daß selbst bei starker Gaszufuhr in das Entgasungssystem die Gaszuleitung bei einer Explosion in den Bereich zwischen Zündschutzelement und Umgebung zumindest so stark abgedämpft wird, daß die gebildete Flamme nach der Zündung nicht mehr genährt wird und erlischt, somit das Zündschutzelement nicht zerstören kann. Dies ist wahrscheinlich darauf zurückzuführen, daß durch den in Gasströmungsrichtung hinter dem Zündschutzelement ausgebildeten Gasaustrittskanal mit wenigstens einer Gasaustrittsöffnung mit einem gegenüber dem Gasaustrittskanal erheblich verringertem Durchströmungsquerschnitt eine Druckkammer gebildet wird, so daß der durch eine explosionsartige Gaszündung entstehende Druck zumindest kurzzeitig eine weitere Gaszufuhr und damit Nährung der Flamme verhindert. In vorteilhafter Weise wird vorgeschlagen, daß die Gasaustrittsöffnung eine Bohrung in einer Abschlußwandung des Gasaustrittskanal ist. So wird gemäß der Erfindung in Gasströmungsrichtung hinter der Fritte der Volumenbereich weitergeführt und bis auf eine sehr kleine Öffnung gegenüber der Umgebung abgeschlossen. Gemäß einem vorteilhaften Vorschlag der Erfindung bildet der Gasaustrittskanal eine Kammer. Vorzugsweise ist die Kammer einseitig durch das Zündschutzelement, an der gegenüberliegenden Seite durch eine im wesentlichen senkrecht zur Gasströmungsrichtung angeordnete Wandung mit der Gasaustrittsöffnung begrenzt. Unter Kammer ist dabei zu verstehen, daß der Gasaustrittskanal in Bezug auf seinen Querschnitt nur sehr kurz ausgebildet wird, so daß sich eine Kammer ergibt. Der wesentliche funktionale Aspekt ist die Ausbildung einer Druckkammer zwischen Fritte und Umgebung durch die Bildung einer Abtrennung mit einer Öffnung ausreichend kleiner Dimension. Die Dimension muß in üblicher Weise einen ungehinderten Gasaustritt gewährleisten, im Zündfall aber einen geeigneten Druckaufbau ermöglichen. Hierzu wird angegeben, daß das Verhältnis der Durchströmungsquerschnitte von Gasaustrittskanal zu Gasaustrittsöffnung im Bereich um 100 : 1 liegt, was nur eine ungefähre Dimensionsvorstellung schaffen soll.

Zur Verbesserung der wirtschaftlichkeit der Rekombinationsvorrichtung hinsichtlich Herstellung, Montage, Entsorgung oder Wiederverwertung wird vorgeschlagen, daß diese einen modularen Aufbau aufweist und wenigstens als Einzelbaugruppen ein Stuzenelement mit einer behälterseitigen Trägereinheit, ein Rekombinationselement mit einem Tragsockel und einen Behälter umfaßt. Das Stutzenelement umfaßt gemäß einem Vorschlag der Erfindung den Anschlußstutzen, den Verbindungskanal, im Verbindungskanal an seinem behälterseitigen Ende eine an der Kanalwandung durch Tragrippen abgestützte Trägereinheit, den Volumenbereich und das Zündschutzelement. Natürlich ist die Verbindungsöffnung ausgebildet. Optional kann die Druckkammereinheit angeordnet sein, die aber auch eine selbstständige Baugruppe sein kann. Das Stutzenelement weist an einem Ende einen Verbindungsteil zum Anschluß an eine Öffnung eines Akkumulators auf, der je nach Anwendungsfall mit Befestigungselementen, Gewinde, Nocken für Bajonettverbindungen sowie einem Aufnahmebereich für Dichtmittel, z.B. einen O-Ring versehen sein kann. Daran schließt sich der vorzugsweise trichterförmige Verbindungskanal mit seitlichem Volumenbereich in Form eines Rohrstutzens, abgeschlossen durch eine Fritte, an, wobei in der entsprechenden Wandung zwischen Verbindungskanal und Volumenbereich eine kleine Öffnung angeordnet ist. Der andere Endbereich ist für die Montage des Behälters ausgelegt. In erfindungswesentlicher Weise ist eine Aufnahmenut für einen Dichtring und eine Rastnut für eine Verrastung mit entsprechenden Rastnocken an der Behälterunterkante vorgesehen. Alternativ können Nut und Nocken auch ausgetauscht angeordnet sein. Auch andere Verbindungselemente können eingesetzt werden. Vorzugsweise ist im Verbindungskanal ein Träger angeordnet. Der Träger in Form einer runden Platte ist im Zentrum seitlich umströmbar durch mit der Wandung verbundene Rippen gehalten. Da das Stutzenelement nicht direkt mit der Katalysatoreinheit verbunden ist, kann dieses als Kunststoffspritzteil einstückig ausgebildet werden, mit Ausnahme der Fritte natürlich.

Nach einem weiteren vorteilhaften Vorschlag der Erfindung umfaßt das Rekombinationselement einen mit der Trägereinheit des Stutzenelementes verbindbaren Sockel, auf welchem abstehend zentrisch ein palladiumbeschichteter Katalysatorstab, vorzugsweise und eine diesen konzentrisch umgebende, am freien Ende verschlossene und mit einem Absorbermaterial gefüllte Röhre aus porösem Material angeordnet sind. Die Röhre und die Absorber sind nach dem Stand der Technik gebildet. Das freistehende Ende der Röhre ist vorzugsweise mit Wasserglas verschlossen. Der Sockel ist aus Hitzebeständigem Kunststoff. Er ist zu einer Seite hin topfförmig, wobei zwei konzentrische Töpfe gebildet sind. In den inneren wird der Katalysatorstab, in den äußeren die Röhre eingesetzt. Der Boden weist Rastnuten auf, die der Aufnahme von Rastnocken auf der Trägerplatte des Stuzenelementes dienen, so daß nach Vormontage der Katalysatoreinheit diese leicht auf das Stuzenelement aufsetzbar und dort verrastbar ist. Zur weiteren Verbindung der verschiedenen Elemente kann ein Ultraschall-Schweißverfahren eingesetzt werden.

Vorzugsweise ist der Behälter im wesentlichen zylindrisch, einseitig verschlossen und am offenen Ende unter Einsatz eines Dichtringes gasdicht auf das Stutzenelement aufsetzbar ausgebildet. Dazu wird weiterhin vorgeschlagen, daß der Behälter am offenen Ende axial verlaufende Einkerbungen aufweist. In diese können am Stutzenelement ausgebildete Vorsprünge eingreifen, so daß der Behälter gegen Verdrehung gesichert ist. Nach innen ragende Nocken am unteren Behälterrand greifen in eine Rastnut am äußeren Umfang des Stutzenelementes ein. Ein erfindungsgemäßer Ring kann den unteren Behälterring übergreifend aufgeschoben werden, so daß der Behälter auch gegen Verkippen gesichert ist.

Mit besonderem Vorteil wird vorgeschlagen, daß im Bereich des Gaseinströmquerschnitts des Behälters, also etwa im Übergangsbereich vom Verbindungskanal in den Behälter, eine flächige, im wesentlichen quer in der Gasströmung liegende, den Einströmquerschnitt verjüngende Strömungsbarriere angeordnet ist. Diese stellt eine einfache Überlastsicherung dar, die die Gasströmung zum Katalysatorelement beeinflußt und einen hohen Wirkungsgrad auch bei erhöhten Ladeströmen gewährleistet. Vorteilhafterweise ist die Strömungsbarriere durch einen am Sockelelement angeordneten Ring gebildet. Dieser im Zentralbereich des Strömungsweges vom Verbindungskanal in den Behälter liegende Ring muß vom zuströmenden Gas umströmt werden, welches sich danach gut an die Oberfläche des jenseits des Ringes in Strömungsrichtung liegende Katalysatorelementes anlegt, ohne das die Wasserdampfatmosphäre sich hindernd auswirkt.

Mit der Erfindung wird eine Rekombinationsvorrichtung durch einfache Maßnahmen wirksam und wirtschaftlich weitergebildet. Eine Öffnung im Verbindungskanal dient der Abführung überschüssigen Gases, eine anschließende Fritte dient dem Zündschutz. Eine daran ausbildbare Druckkammer kann Zündrückschlag verhindern. Ein modularer Aufbau macht die Vorrichtung wirtschaftlich hinsichtlich Fertigung, Montage, Wartung sowie Entsorgung bzw. Wiederverwertung auch von Einzelelementen. Eine zusätzliche Strömungsbarriere stellt eine wirksame Überlastungssicherung dar. Die einzelnen Maßnahmen sind jede für sich erfindungswesentlich und können auch unabhängig von den jeweils anderen sinnvoll genutzt werden und einzelne Erfindungen darstellen.

Weitere Vorteile und Merkmale ergeben sich aus der folgenden Beschreibung anhand der Figuren. Dabei zeigen :
- Figur 1: eine Ansicht eines Ausführungsbeispiels für eine Rekombinationsvorrichtung;
- Figur 2: eine Ansicht eines Behälters;
- Figur 3: eine Detailansicht einer behälterseitigen Rastzunge;
- Figur 4: eine Ansicht eines Stuzenelementes;
- Figur 5: eine Draufsicht auf das Stutzenelement gemäß Figur 4;
- Figur 6: eine Schnittansicht entlang Linie VI-VI gemäß Figur 5;
- Figur 7: eine geschnittene Detailansicht eines weiteren Ausführungsbeispiels eines Stutzenelementes;
- Figur 8: eine Ansicht eines Katalysatorelementes;
- Figur 9: eine Ansicht eines Katalysatorstabes;
- Figur 10: eine Ansicht einer porösen Röhre;
- Figur 11: eine Draufsicht auf eine offene Katalysatorbaugruppe;
- Figur 12: eine Draufsicht auf einen Sockel;
- Figur 13: eine Seitenansicht des Sockels gemäß Figur 12;
- Figur 14: eine Unteransicht des Sockels gemäß Figur 12 und
- Figur 15: eine Schnittansicht des Sockels gemäß Figur 12.

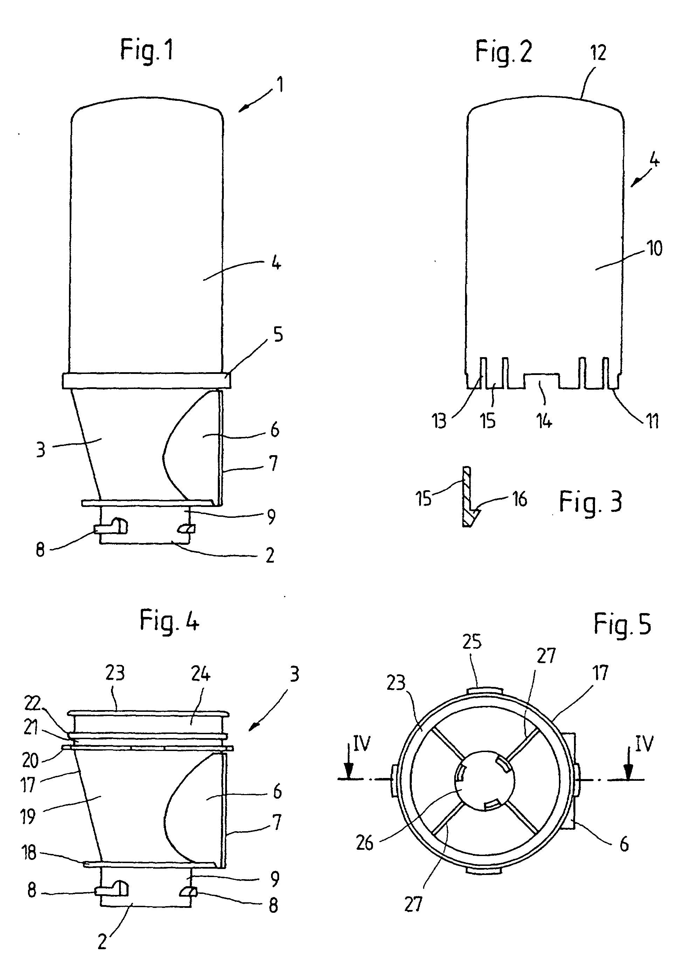

In den Figuren bezeichnen gleiche Bezugszeichen gleiche Teile. Figur 1 zeigt in einer Übersichtsdarstellung ein Ausführungsbeispiel für eine erfindungsgemäße Rekombinationsvorrichtung 1, mit einem Anschlußstutzen 2, einem Stutzenelement 3, einem Behälter 4, einem Verschlußring 5 und einem Verbindungskanal 6, der durch eine Fritte 7 verschlossen ist. Am Anschlußstutzen 2 sind Nocken 8 angeformt, um in Art einer Bajonettverbindung die Vorrichtung an der Zellenöffnung eines nicht gezeigten Akkumulators anzuordnen. Ein über den Nocken 8 verbleibender Dichtringbereich 9 dient der Aufnahme eines nicht gezeigten Dichtringes.

Figuren 2 und 3 zeigen Details des Behälters 4. Dieser besteht im wesentlichen aus einem dünnwandigen Kunststoffzylinder 10 mit einem offenen Ende 11 und einem verschlossenen Ende 12. Am offenen Ende 11 sind vertikal verlaufende Einschnitte 13 ausgeführt bzw. ausgespart, so daß Zungen 15 gebildet werden. Dadurch ist der Behälter 4 am offenen Ende 11 flexibel, so daß er auf einen entsprechenden Rand mit Spannung aufsetzbar ist, beispielsweise unter Aufnahme eines nicht gezeigten Dichtringes. Einzelne der Zungen 15 können, wie in Figur 3 gezeigt, Rastnocken 16 aufweisen, um einen Ringbereich verrastend zu untergreifen. Weiterhin sind am offenen Ende Ausnehmungen 14 gebildet. Diese dienen der Aufnahme entsprechender Nocken, so daß eine Verdrehsicherung gebildet wird.

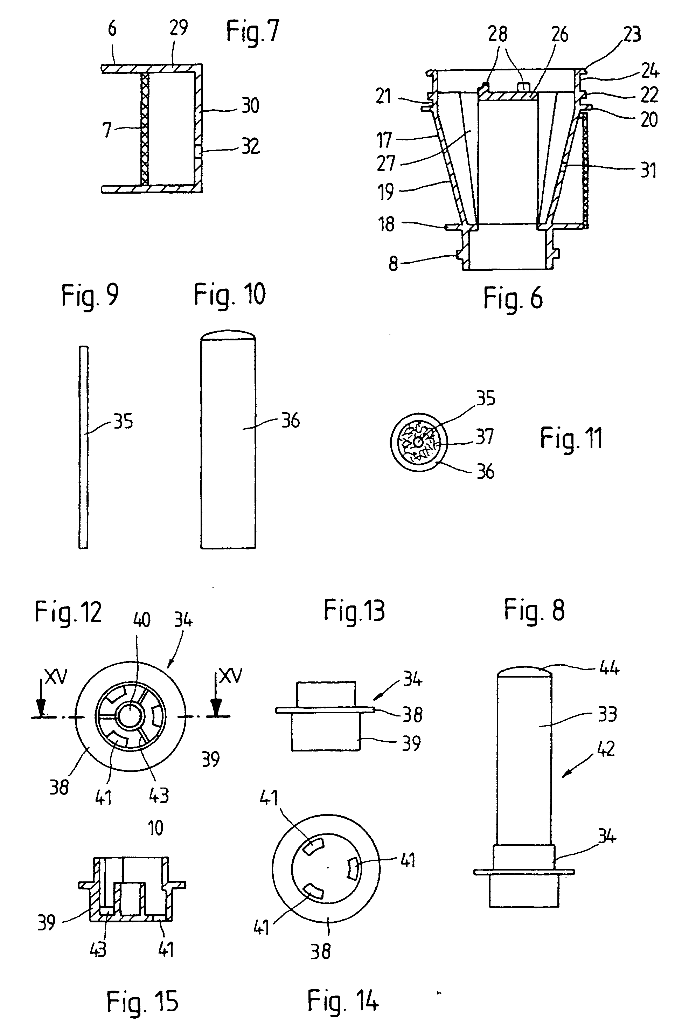

Figuren 4 bis 7 zeigen Details des Stutzenelementes 3 gemäß dem beschriebenen Ausführungsbeispiels. Dieses bis auf die Fritte 7 einstückig gebildete Kunstoffelement umfaßt den Kunststoffstutzen 17. Die Fritte 7 ist ein Sinterelement aus Polypropylen oder -ethylen und duech Kleben, Schweißen oder dergleichen am Stutzenelement 3 befestigt. Der Stuzen 17 weist am unteren Ende den Anschlußstutzen 2 mit den Bajonett-Nocken 8 und dem Dichtringbereich 9 auf. Daran schließt sich ein Aufsetzflansch 18 an, welcher beim Aufsetzen auf einen Akkumulator den Montageanschlag bildet. Darüber liegt der Verbindungskanal 19 mit seitlich angeformtem Volumenbereich 6. Im oberen Bereich über dem Verbindungskanal 19 liegen ein Rastring 20 mit Rastnocken 25, die in die Ausnehmungen 14 des Behälters beim Zusammenbau der Vorrichtung eingreifen. Darüber liegen die Klemmnut 21 und der Klemmring 22. Die am Behälter 4 ausgebildeten Rastnocken 16 untergreifen den Klemmring 22 und greifen in die Klemmnut 21 ein. Darüber liegen die Dichtnut 24 und der abschließende Dichtflansch 23. In die Dichtnut kann ein nicht gezeigter Dichtring, ein sogenannter O-Ring, eingelegt werden. So kann der Behälter gasdicht und verdrehsicher durch einfaches Verrasten mit dem Stuzenelement verbunden werden. Der in Figur 1 gezeigte Verschlußring 5 kann dann von oben übergeschoben werden, so daß die Rastnocken 1 6 der Zungen 15 in der Rastnut 21 gehalten werden. Der Behälter wird dadurch kippsicher.

Im Inneren des Verbindungskanals 19 sind Tragrippen 27 ausgeformt, die die Trägerplatte 26 stützen. Das Gas strömt zwischen den Rippen und um die Trägerplatte herum. Auf der Trägerplatte 26 sind Rastnocken 28 ausgebildet, im gezeigten Ausführungsbeispiel drei Nocken im 120-Grad Abstand. Weiterhin ist in der Wandung des Verbindungskanals 19 die Öffnung 31 ausgebildet, die den Verbindungskanal 19 mit dem angeformten Volumenbereich verbindet. Die Öffnung ist sehr klein dimensioniert und ermöglicht nur den Auslaß überschüssigen Gases bei entsprechendem Druck. Figur 7 zeigt die besondere Ausführungsform, bei welcher an den Volumenbereich 6, der durch die Fritte 7 begrenzt ist, ein Gasaustrittskanal 29 angeformt und durch die Wandung 30 verschlossen ist, in welcher sich die klein dimensionierte Gasaustrittsöffnung 32 befindet. Im gezeigten Ausführungsbeispiel ist der zusätzliche Bereich angeformt gezeigt, der Gasaustrittskanal mit Wandung und Öffnung kann aber auch als separate Baugruppe ausgebildet werden.

Figuren 8 bis 15 zeigen Details des Katalysatorelementes 42. Dieses umfaßt die Katalysatorbaugruppe 33 und den Sockel 34. Gemäß Figuren 9 bis 11 besteht die Katalysatorbaugruppe aus dem Katalysatorstab 35, welcher konzentrisch in die poröse Röhre 36 unter Zwischenlage des Absorbermaterials 36 eingesetzt wird. Die Montage erfolgt unter Verwendung eines Sockels 34. Dieser ist detailliert in Figuren 12 bis 15 gezeigt. Es handelt sich um ein Kunstoffteil, welches wegen des direkten Kontaktes mit dem Katalysator und dem exothermen Rekombinationsvorganges aus hitzebeständigem Kunststoff besteht.

Der Sockel umfaßt einen äußeren Topf 39 und konzentrisch einen Innentopf 40. In den Innentopf 40 wird der Katalysatorstab 35 eingesetzt, in den Topf 39 die poröse Röhre 36. Diese steht auf Stegen 43 und wird am freien Ende 44 beispielsweise durch Wasserglas verschlossen, wie in Figur 8 angedeutet. Im Boden des Topfes sind Ausnehmungen 41 gebildet, die bei der Montage mit den Nocken 28 auf der Trägerplatte 26 zusammenwirken. Der Topf weist an der Außenwandung einen Ringflansch 38 auf, der im Einbauzustand eine zentrische Strömungsbarriere darstellt.

Die beschriebenen Ausführungsbeispiele dienen der Erläuterung und sind nicht beschränkend. Insbesondere sind die modularen Baugruppen, nämlich Stuzenelement, Behälter und Katalysatorelement, variierbar.

### Bezugszeichenliste

- 1: Rekombinationsvorrichtung
- 2: Anschlußstuzen
- 3: Stutzenelement
- 4: Behälter
- 5: Verschlußring
- 6: Volumenbereich
- 7: Fritte
- 8: Nocken
- 9: Dichtringaufnahmebereich
- 10: Kunststoffzylinder
- 11: offenes Ende
- 1 2: verschlossenes Ende
- 13: Vertikaleinschnitt
- 14: Ausnehmung
- 15: Zunge
- 16: Rastnocken
- 17: Kunststoffstutzen
- 18: Aufsetzflansch
- 19: Verbindungskanal
- 20: Rastring
- 21: Klemmnut
- 22: Klemmring
- 23: Dichtflansch
- 24: Dichtnut
- 25: Rastnocken
- 26: Trägerplatte
- 27: Tragrippe
- 28: Rastnocken
- 29: Gasaustrittskanal
- 30: Wandung
- 31: Öffnung
- 32: Öffnung
- 33: Katalysatorbaugruppe
- 34: Sockel
- 35: Katalysatorstab
- 36: Röhre
- 37: Absorber
- 38: Ringflansch
- 39: Topf
- 40: Innentopf
- 41: Ausnehmung
- 42: Katalysatorelement
- 43: Steg
- 44: verschlossenes Ende

## Patentansprüche

1. Rekombinationsvorrichtung zur katalytischen Rekombination von in Akkumulatoren enstehendem Wasserstoff und Sauerstoff zu Wasser,
**dadurch gekennzeichnet,**
**daß** sie einen modularen Aufbau aufweist und als Einzelbaugruppen wenigstens
- ein Stutzenelement mit einem Anschlußstutzen zum gasdichten Anschluß der Vorrichtung an einen Akkumulator
- ein Rekombinationselement und
- einen gegenüber der Umgebung gasdichten Behälter, in welchem das Rekombinationselement angeordnet ist,
aufweist, wobei die Rekombinationsvorrichtung einen im Stutzenelement angeordneten Verbindungskanal für den gasdichten Gaszutritt vom Anschlußstutzen zum Behälter und den Wasserablauf in umgekehrter Richtung aufweist, wobei neben dem Verbindungskanal ein Volumenbereich ausgebildet ist, der gegenüber der Umgebung offen aber durch ein Zündschutzelement abgegrenzt ist, und wobei der Verbindungskanal mit dem Volumenbereich über eine Verbindungsöffnung verbunden ist.

2. Rekombinationsvorrichtung nach Anspruch 1, **dadurch gekennzeichnet, daß** der Volumenbereich ein seitlich an den Verbindungskanal angeordneter von diesem abstehender Rohrstutzen ist.

3. Rekombinationsvorrichtung nach Anspruch 1 oder 2, **dadurch gekennzeichnet, daß** das Zündschutzelement eine aus einem Sintermaterial bestehende Fritte ist.

4. Rekombinationsvorrichtung nach einem der vorhergehenden Ansprüche 1 bis 3, **dadurch gekennzeichnet, daß** die Verbindungsöffnung eine Bohrung in der Wandung des Verbindungskanals ist, deren Durchmesser gegenüber dem des Verbindungskanals sowie gegenüber dem des Volumenbereiches erheblich verringert ist.

5. Rekombinationsvorrichtung nach einem der vorhergehenden Ansprüche 1 bis 4, **dadurch gekennzeichnet, daß** in Gasströmungsrichtung hinter dem Zündschutzelement ein Gasaustrittskanal mit wenigstens einer Gasaustrittsöffnung mit einem gegenüber dem Gasaustrittskanal erheblich verringerten Durchströmungsquerschnitt ausgebildet ist.

6. Rekombinationsvorrichtung nach einem der Ansprüche 1 bis 5, **dadurch gekennzeichnet, daß** das Stutzenelement den Anschlußstutzen, den Verbindungskanal, im Verbindungskanal an seinem behälterseitigen Ende eine an der Kanalwandung durch Tragrippen abgestützte Trägereinheit, den Volumenbereich und das Zündschutzelement umfaßt.

7. Rekombinationsvorrichtung nach einem der Ansprüche 1 bis 6, **dadurch gekennzeichnet, daß** das Rekombinationselement einen mit der Trägereinheit des Stutzenelements verbindbaren Sockel umfaßt, auf welchem abstehend zentrisch ein palladiumbeschichteter Katalysatorstab und eine diesen konzentrisch umgebende, am freien Ende verschlossene und mit einem Absorbermaterial gefüllt Röhre aus porösem Material angeordnet sind.

8. Rekombinationsvorrichtung nach einem der Ansprüche 1 bis 7, **dadurch gekennzeichnet, daß** der Sockel mit der Trägereinheit durch Ultraschallschweißen verbindbar ist.

9. Rekombinationsvorrichtung nach einem der vorhergehenden Ansprüche 1 bis 8, **dadurch gekennzeichnet, daß** der Behälter im wesentlichen zylindrisch, einseitig verschlossen und am offenen Ende unter Einsatz eines Dichtringes gasdicht auf das Stutzenelement aufsetzbar ausgebildet ist.

10. Rekombinationsvorrichtung nach Anspruch 9, **dadurch gekennzeichnet, daß** der Behälter am offenen Ende axial verlaufende Einkerbungen aufweist.

11. Rekombinationsvorrichtung nach einem der vorhergehenden Ansprüche 1 bis 10, **dadurch gekennzeichnet, daß** im Bereich des Gaseinströmquerschnitts des Behälters eine flächige, im wesentlichen quer in der Gasströmung liegende, den Einströmquerschnitt verjüngende Strömungsbarriere angeordnet ist.

12. Rekombinationsvorrichtung nach Anspruch 11, **dadurch gekennzeichnet, daß** die Strömungsbarriere durch einen am Sockelelement angeordneten Ring gebildet ist.

## Claims

1. A recombination device for the catalytic recombination of hydrogen and oxygen produced in accumulators to form water, **characterised in that** it has a modular construction and includes at least the following individual units:
- a socket element with a connecting pipe for connecting the device in a gas-tight manner to an accumulator;
- a recombination element; and
- a container which is gas-tight with respect to the surroundings and in which the recombination element is arranged,
the recombination device having a connecting passage, arranged in the socket element, for the gas-tight admission of gas from the connecting pipe to the container and the draining of water in the reverse direction, whereby, adjacent to the connecting passage, a volume region is formed, which is open to the environment but is bounded by an ignition protection element and whereby the connecting passage is connected to the volume region via a connecting opening.

2. A recombination device as claimed in claim 1, **characterised in that** the volume region is a tube arranged laterally on the connecting passage and projecting from it.

3. A recombination device as claimed in claims 1 or 2, **characterised in that** the ignition protection element is a frit comprising a sintered material.

4. A recombination device as claimed in one of the preceding claims 1 to 3, **characterised in that** the connecting opening is a bore in the wall of the connecting passage, the diameter of which is considerably reduced with respect to that of the connecting passage and with respect to that of the volume region.

5. A recombination device as claimed in one of the preceding claims 1 to 4, **characterised in that** formed behind the ignition protection element in the gas flow direction there is a gas outlet passage with at least one gas outlet opening with a flow cross-section which is considerably reduced with respect to the gas outlet passage.

6. A recombination device as claimed in one of claims 1 to 5, **characterised in that** the socket element includes the connecting pipe, the connecting passage, a carrier unit supported on the passage wall by support ribs at the container end of the connecting passage, the volume region and the ignition protection element.

7. A recombination device as claimed in one of claims 1 to 6, **characterised in that** the recombination element includes a base, which is connectable to the carrier unit of the socket element and arranged on which, projecting centrally there is a palladium-coated catalyst rod and a tube of porous material, which surrounds it concentrically and is closed at its free end and is filled with an absorber material.

8. A recombination device as claimed in one of claims 1 to 7, **characterised in that** the base is connectable to the carrier unit by ultrasonic welding.

9. A recombination device as claimed in one of the preceding claims 1 to 8, **characterised in that** the container is substantially cylindrical, closed at one side and may be placed in a gas-tight manner at the open end on the socket element with the insertion of a sealing ring.

10. A recombination device as claimed in claim 9, **characterised in that** the container has axially extending grooves at its open end.

11. A recombination device as claimed in one of the preceding claims 1 to 10, **characterised in that** arranged in the vicinity of the gas inlet cross-section of the container there is a flat flow barrier, which extends substantially transversely in the gas flow and restricts the inflow area.

12. A recombination device as claimed in claim 11, **characterised in that** the flow barrier is constituted by a ring arranged on the base element.

## Revendications

1. Dispositif de recombinaison destiné à la recombinaison catalytique en eau d'hydrogène et d'oxygène générés dans des accumulateurs, **caractérisé en ce qu'**il présente un agencement modulaire, et comporte en tant que modules individuels au moins
- un élément de tubulure avec une tubulure de raccordement pour le raccordement étanche aux gaz du dispositif à un accumulateur,
- un élément de recombinaison, et
- un réservoir étanche aux gaz par rapport à l'environnement, dans lequel est disposé l'élément de recombinaison,
le dispositif de recombinaison comportant un canal de liaison disposé dans l'élément de tubulure pour l'entrée de gaz étanche aux gaz de la tubulure de raccordement vers le réservoir, et l'écoulement de l'eau dans le sens inverse, une zone de volume étant réalisée à côté du canal de liaison, laquelle est ouverte par rapport à l'environnement, mais délimitée par un élément de protection contre l'inflammation, et le canal de liaison étant relié à la zone de volume par l'intermédiaire d'un orifice de liaison.

2. Dispositif de recombinaison selon la revendication 1, **caractérisé en ce que** la zone de volume est une tubulure disposée à côté du canal de liaison, et dépassant de ce dernier.

3. Dispositif de recombinaison selon la revendication 1 ou 2, **caractérisé en ce que** l'élément de protection contre l'inflammation est une fritte constituée de matériau fritté.

4. Dispositif de recombinaison selon l'une quelconque des revendications précédentes 1 à 3, **caractérisé en ce que** l'orifice de liaison est un perçage pratiqué dans la paroi du canal de liaison, dont le diamètre est nettement inférieur à celui du canal de liaison, ainsi qu'à celui de la zone de volume.

5. Dispositif de recombinaison selon l'une quelconque des revendications précédentes 1 à 4, **caractérisé en ce qu'**un canal de sortie de gaz comportant au moins un orifice de sortie de gaz est prévu en aval de l'élément de protection contre l'inflammation dans le sens de la circulation des gaz, dont la section transversale de passage est nettement plus faible que celle du canal de sortie de gaz.

6. Dispositif de recombinaison selon l'une quelconque des revendications 1 à 5, **caractérisé en ce que** l'élément de tubulure comprend la tubulure de raccordement, le canal de liaison, une unité de support dans le canal de liaison au niveau de son extrémité située du côté du réservoir, laquelle prend appui contre la paroi du canal par des nervures de support, la zone de volume et l'élément de protection contre l'inflammation.

7. Dispositif de recombinaison selon l'une quelconque des revendications 1 à 6, **caractérisé en ce que** l'élément de recombinaison comporte un socle pouvant être relié à l'unité de support de l'élément de tubulure, sur lequel sont disposés de manière centrée et en dépassant, une barre catalytique revêtue de palladium et, entourant celle-ci de façon concentrique, un tube en matériau poreux rempli de matériau d'absorption fermé au niveau de son extrémité libre.

8. Dispositif de recombinaison selon l'une quelconque des revendications 1 à 7, **caractérisé en ce que** le socle peut être relié à l'unité de support par un soudage aux ultra-sons.

9. Dispositif de recombinaison selon l'une quelconque des revendications précédentes 1 à 8, **caractérisé en ce que** le réservoir est agencé de façon sensiblement cylindrique, fermé d'un côté, et réalisé afin de pouvoir être emboîté de façon étanche aux gaz par son extrémité ouverte sur l'élément de tubulure, par l'intermédiaire d'une bague d'étanchéité.

10. Dispositif de recombinaison selon la revendication 9, **caractérisé en ce que** le réservoir comporte sur son extrémité ouverte des découpes s'étendant axialement.

11. Dispositif de recombinaison selon l'une quelconque des revendications précédentes 1 à 10, **caractérisé en ce qu'**une barrière d'écoulement plane, située pour l'essentiel transversalement dans le flux gazeux, et rétrécissant la section transversale d'entrée, est disposée dans la zone de la section transversale d'entrée de gaz du réservoir.

12. Dispositif de recombinaison selon la revendication 11, **caractérisé en ce que** la barrière d'écoulement est constituée d'une bague disposée sur l'élément de socle.
